# EUROPÄISCHE PATENTSCHRIFT

(11) **EP 3 690 323 B1**
(45) Veröffentlichungstag und Bekanntmachung des Hinweises auf die Patenterteilung: **29.06.2022**
(21) Anmeldenummer: 20154059.8
(22) Anmeldetag: 28.01.2020
(51) Int. Cl.: F24C 7/08, E03C 1/05, E03D 5/10, A47J 43/04, F25D 23/00, F24C 15/20, G06F 3/03, F25D 29/00, F25D 23/02

(54) **GESTENSTEUERUNGSMODUL UND DIESES UMFASSENDES HAUSHALTSGERÄT**
GESTURE CONTROL MODULE AND HOUSEHOLD APPLIANCE COMPRISING THE SAME
MODULE DE COMMANDE GESTUELLE ET APPAREIL ÉLECTROMÉNAGER COMPORTANT LEDIT MODULE DE COMMANDE GESTUELLE

(30) Priorität: 29.01.2019 CN 201910086645
(43) Veröffentlichungstag der Anmeldung: 05.08.2020
(73) Patentinhaber: Diehl AKO Stiftung & Co. KG, 88239 Wangen (DE)
(72) Erfinder: Li, Zhongke, Nanjing (CN); Fan, Shuhai, Nanjing (CN); Shi, Lin, Nanjing, 211100 (CN)
(74) Vertreter: Diehl Patentabteilung

(56) Entgegenhaltungen:
- EP-A1- 3 034 948
- CN-A- 102 892 228
- CN-U- 205 292 480
- DE-A1- 19 860 261
- KR-A- 20040 027 301
- US-A1- 2010 295 773
- US-A1- 2014 267 166

## Beschreibung

Die vorliegende Offenbarung betrifft ein Gestensteuerungsmodul und ein dieses umfassendes Haushaltsgerät.

Es ist besonders vorteilhaft, in Küchengeräten oder Sanitärgeräten eine Gestensteuerung zu verwenden, da es möglich ist, durch einen berührungslosen Betrieb die Geräte sauber und hygienisch zu halten und eine Verunreinigung zu vermeiden. Solche Gestensteuerungsmodule im Stand der Technik haben jedoch im Allgemeinen ein großes Volumen, was dem industriellen Design von Haushaltsgeräten abträglich ist. Außerdem ist das bestehende Gestensteuerungsmodul, das vom Benutzer das Ausführen einer ausladenden Bewegung erfordert, für Umgebungslicht anfällig und hat eine geringe Auslösegenauigkeit.

CN 205 292 480 U offenbart eine Gestenerkennungsvorrichtung mit vier Infrarot-Leuchtdioden und einem Infrarot-Empfangssensor, die dem Oberbegriff des anhängenden Anspruchs 1 entspricht. US 2010/0295773 A1 offenbart ein elektronisches Gerät mit einer Infrarot-Messanordnung zum Erfassen und Auswerten von Gesten, wobei die Messanordnung mehrere Infrarot-Leuchtdioden und einen Infrarot-Sensor aufweist, wobei der Infrarot-Sensor zum Beispiel gegen die Infrarot-Leuchtdioden abgeschirmt sein kann. KR 2004 0027301 A offenbart einen Herd mit einem Lüfter darüber, dem vom Herd ein Infrarot-Steuersignal gesendet werden kann, wobei auf der Herdplatte im Durchgangsbereich des Infrarot-Steuersignals eine Infrarot-durchlässige Tinte vorgesehen sein kann. DE 198 60 261 A1 offenbart die Anwendung eines Bewegungsmelders bei einer Dunstabzugseinrichtung, und CN 102 892 228 A offenbart ein Grundprinzip eines Infrarot-Gestenerfassungssystems. US 2014/0267166 A1 offenbart ein kombiniertes optisches Messsystem, das sowohl ein Infrarot-Gestenmesssystem mit Infrarot-Gesten-Leuchtdioden und Infrarot-Gesten-Photodioden als auch ein Infrarot-Berührungsmesssystem mit Infrarot-Berührungs-Leuchtdioden und Infrarot-Berührungs-Photodioden enthält.

Eine Aufgabe der vorliegenden Offenbarung besteht darin, ein verbessertes Gestensteuerungsmodul und ein ein solches Gestensteuerungsmodul umfassendes Haushaltsgerät zur Verfügung zu stellen.

Diese Aufgabe wird gelöst durch ein in Anspruch 1 definiertes Gestensteuerungsmodul bzw. ein in Anspruch 9 definiertes Haushaltsgerät.

Das erfindungsgemäße Gestensteuerungsmodul kann einen berührungslosen Gestenbetrieb ausführen. In der vorliegenden Offenbarung sind die mindestens zwei Infrarot-Leuchtdioden in der Lage, Infrarotlicht mit einer Wellenlänge zwischen 770 nm und 1 mm auszustrahlen. Die Anzahl der Infrarot-Leuchtdioden kann zwei, drei, vier, fünf oder mehr betragen, und diese Infrarot-Leuchtdioden werden abwechselnd, insbesondere gemäß einer vorbestimmten Zeitsteuerung während des Betriebs, eingeschaltet, wodurch Infrarotlicht ausgestrahlt wird, das von der Hand eines Benutzers, die sich diesem nähert, reflektiert und von der Infrarot-Empfängerröhre empfangen werden kann. Die Infrarot-Empfängerröhre kann als lichtempfindliche Infrarotdiode oder lichtempfindliche Infrarottriode aufgebaut sein. Der Signalprozessor kann das erzeugte Signal verarbeiten und analysieren, wenn die Infrarot-Empfängerröhre das reflektierte Infrarotlicht empfängt, um eine Geste zu erkennen. Hier umfasst der Signalprozessor ferner einen Treiberkreis für Infrarot-Leuchtdioden, eine Signalaufbereitungsschaltung für die Infrarot-Empfängerröhre und eine Mikrokontrollereinheit (MCU) zum Analysieren eines Signals.

Gemäß der Erfindung ist eine Lichtbegrenzungsstruktur für die Infrarot-Leuchtdioden und/oder die Infrarot-Empfängerröhre vorgesehen. Mit anderen Worten ist die oben beschriebene Lichtbegrenzungsstruktur auf mindestens einem von den Infrarot-Leuchtdioden und der Infrarot-Empfängerröhre angeordnet. Außerdem umgibt die Lichtbegrenzungsstruktur einen Umfang der Infrarot-Leuchtdioden und/oder der Infrarot-Empfängerröhre und fluchtet mit einem oberen Ende der Infrarot-Leuchtdioden und/oder der Infrarot-Empfängerröhre oder liegt höher als dieses.

Mittels der Lichtbegrenzungsstruktur für die Infrarot-Empfängerröhre ist es möglich, die Infrarot-Leuchtdioden gegenüber einem Lichtaustritt zur Infrarot-Empfängerröhre innerhalb des Moduls zu isolieren und den Winkel des empfangenden Lichts zu begrenzen, um die Störung von Umgebungslicht zu verringern. Insbesondere wenn die Lichtbegrenzungsstruktur das obere Ende der Infrarot-Empfängerröhre übersteigt, kann der Winkel des empfangenden Lichts weiter begrenzt oder verringert werden, um eine stärkere und zuverlässigere Abschirmung gegenüber Umgebungslicht des Gestensteuerungsmoduls zu ergeben.

Mittels der Lichtbegrenzungsstruktur für die Infrarot-Leuchtdioden ist es möglich, einen Lichtemissionswinkel der Infrarot-Leuchtdioden auf eine strukturelle, Licht abschirmende Weise zu begrenzen oder zu verringern. Dadurch kann die Verwendung von kostspieligen Infrarot-Leuchtdioden mit kleinem Winkel vermieden werden. Insbesondere wenn die Lichtbegrenzungsstruktur das obere Ende der Infrarot-Leuchtdioden übersteigt, kann der Lichtemissionswinkel weiter begrenzt oder verringert werden, um einen engeren zu emittierenden Infrarotstrahl zu schaffen und die Gestenerkennung genauer zu positionieren.

Gemäß der Erfindung ist die Infrarot-Empfängerröhre zwischen den jeweiligen Infrarot-Leuchtdioden angeordnet, und ein Mittenabstand zwischen den Infrarot-Leuchtdioden und der Infrarot-Empfängerröhre liegt zwischen 5 mm und 50 mm. In der vorliegenden Offenbarung ist die eine Infrarot-Empfängerröhre in der Mitte der mindestens zwei Infrarot-Leuchtdioden vorgesehen, sodass mehrere Infrarot-Leuchtdioden eine Infrarot-Empfängerröhre gemeinsam nutzen. Zunächst senkt dies die Herstellungskosten. Insbesondere ist auch spezifiziert, dass der Mittenabstand zwischen diesen in einem Bereich zwischen 5 mm und 50 mm liegt. Auch liegt ein Abstand von zwischen 5 mm und 50 mm zwischen der Mitte der Infrarot-Leuchtdioden und derjenigen der Infrarot-Empfängerröhre vor. Mittels des oben beschriebenen Mittenabstands, der viel geringer ist als im Stand der Technik, ist es möglich, eine feinere Geste zu erkennen und das Benutzererlebnis zu verbessern. Es ist keine übermäßig große Bewegung erforderlich, wenn der Benutzer eine Geste macht. Der hier verwendete Ausdruck "zwischen jeweiligen Infrarot-Leuchtdioden" kann sich auf eine Zwischenposition von zwei oder mehr Infrarot-Leuchtdioden beziehen. Bei zwei Infrarot-Leuchtdioden ist die Zwischenposition nicht nur auf den Mittelpunkt begrenzt, wo die beiden linear verbunden sind, sondern schließt auch andere Positionen ein, die von dem Mittelpunkt abweichen, wie eine Position näher an den Infrarot-Leuchtdioden auf einer Seite relativ zum Mittelpunkt oder eine Position, die von der Position abweicht, an der die beiden Infrarot-Leuchtdioden linear verbunden sind, solange die Infrarot-Empfängerröhre die Reflexionssignale der beiden Infrarot-Leuchtdioden unter spezifizierten Betriebsbedingungen empfangen kann. Außerdem ist bei mehr als zwei Infrarot-Leuchtdioden die Zwischenposition nicht nur auf die Mitte, den Schwerpunkt, den Höhenschnittpunkt, den Inkreismittelpunkt oder den Ankreismittelpunkt der Strecke (z. B. sind mehrere Infrarot-Leuchtdioden in einer Geraden angeordnet), des Dreiecks, des Vierseits oder des Polygons, die aus diesen Leuchtdioden bestehen, begrenzt, sondern umfasst auch jede Position um diese Position herum, solange die Infrarot-Empfängerröhre die Reflexionssignale dieser Infrarot-Leuchtdioden unter spezifizierten Betriebsbedingungen empfangen kann.

Die oben beschriebenen zwei Merkmale der Erfindung sind auch komplementär. Da der Lichtemissionswinkel und/oder -empfangswinkel durch Verwendung der Licht begrenzenden Struktur begrenzt ist/sind, ist es auch möglich, den Mittenabstand zwischen den Infrarot-Leuchtdioden und der Infrarot-Empfängerröhre innerhalb eines so kleinen Wertebereichs von 5 mm bis 50 mm zu gestalten, wodurch ein günstiges Signal-Rausch-Verhältnis und eine günstige Auslösegenauigkeit gewährleistet werden.

Wenn außerdem das Gestensteuerungsmodul in einer Dunstabzugshaube verwendet wird, kann der durch das Kochen erzeugte Dampf auch Infrarotlicht reflektieren. Außerdem kann die oben beschriebene Konfiguration gemäß der vorliegenden Offenbarung auch einen günstigen Widerstand gegenüber der Störung des Dampfes aufweisen.

Gemäß der vorliegenden Offenbarung ist die Lichtbegrenzungsstruktur als ein Hohlzylinder, ein Hohlprisma, ein hohler Kegelstumpf oder ein hohler Pyramidenstumpf gebildet. Die Lichtbegrenzungsstruktur kann als eine Hülse oder eine Buchse verstanden werden, die die Infrarot-Leuchtdioden umgibt, die eine Zylinder- oder Pyramidenform aufweisen kann und die insbesondere die Form eines Zylinders, eines Prismas (einschließlich eines Würfels, eines rechteckigen Parallelepids, eines sechseckigen Prismas, eines achteckigen Prismas), eines Kegelstumpfes oder eines Pyramidenstumpfes haben kann. Mit anderen Worten kann die Lichtbegrenzungsstruktur einen in Längsrichtung gleichmäßigen Querschnitt aufweisen oder leicht konisch erweitert sein. Insbesondere kann spezifiziert sein, dass der Querschnitt der Infrarot-Leuchtdioden und/oder der Infrarot-Empfängerröhre 40 % bis 90 % von demjenigen des Hohlraums der Lichtbegrenzungsstruktur einnimmt. Hier übersteigt die Höhe der Lichtbegrenzungsstruktur vorzugsweise das obere Ende der Infrarot-Leuchtdioden und/oder der Infrarot-Empfängerröhre, sodass der Lichtemissionswinkel/Lichtempfangswinkel hiervon begrenzt werden kann. Im Allgemeinen sind die Infrarot-Leuchtdioden / ist die Infrarot-Empfängerröhre mit einem günstigen Richtfaktor, das heißt einem kleinen Durchlasswinkel/Empfangswinkel, kostspielig, während mittels des Lichtbegrenzungswinkels der vorliegenden Offenbarung eine kostengünstige Infrarot-Leuchtdiode/Infrarot-Empfängerröhre mit einem großen Emissionswinkel/Empfangswinkel zu geringen Kosten eingesetzt werden kann. Demgemäß werden die Herstellungskosten des Gestensteuerungsmoduls verringert.

Es ist anzumerken, dass die Lichtbegrenzungsstruktur der vorliegenden Offenbarung nicht auf die vorstehend erwähnten geometrischen Formen begrenzt ist. Es ist auch möglich, eine zylindrische oder konische Form in Betracht zu ziehen, die auf einer oder beiden Seiten gerillt ist, wie einen zylindrischen Hohlkörper mit einem C-förmigen Querschnitt, einen gebogenen Körper und dergleichen. Eine solche Lichtbegrenzungsstruktur realisiert auch eine Blockade eines Lichtaustritts von den Infrarot-Leuchtdioden zur Infrarot-Empfängerröhre und das Begrenzen des Durchlasswinkels und/oder des Empfangswinkels in einem bestimmten Winkelbereich. Sie ist nicht darauf begrenzt, und es können mehrere miteinander verbundene zylindrische Körper oder konische Körper in Betracht gezogen werden. Zum Beispiel sind drei zylindrische Hohlkörper als ein Element miteinander verbunden, das jeweils eine Infrarot-Empfängerröhre und zwei Infrarot-Leuchtdioden umhüllt.

Nach einer Ausführungsform der vorliegenden Offenbarung umfasst das Gestensteuerungsmodul eine Frontabdeckung und die Lichtbegrenzungsstruktur ist integral auf der Frontabdeckung ausgebildet. Demgemäß werden die Anzahl der Teile und die Montagekosten des Gestensteuerungsmoduls verringert, und die strukturelle Festigkeit und Stabilität werden verbessert. Außerdem kann die Frontabdeckung auch mit den Befestigungsfunktionen der Abdichtung und Montage integriert sein. Es ist anzumerken, dass die Lichtbegrenzungsstruktur gemäß der vorliegenden Offenbarung das untere Ende der Infrarot-Leuchtdioden und/oder der Infrarot-Empfängerröhre nicht zwingend umgeben muss, da ihre Durchlassfläche/Empfangsfläche normalerweise innerhalb der oberen zwei Drittel der Fläche des Elements aufgebaut ist.

der Erfindung ist das Gestensteuerungsmodul mit einer Berührungsfunktion integriert. Demgemäß können sowohl die berührungslose Gestensteuerung als auch die Berührungssteuerung durch dasselbe Gestensteuerungsmodul realisiert werden. Die funktionelle Integration des Gestensteuerungsmoduls wird durch die Berührungsfunktion verbessert. Auf diese Weise können, auch wenn die Gestenfunktion fehlschlägt, die Grundfunktionen der Maschine auch durch die Berührungsfunktion erhalten bleiben.

Erfindungsgemäß umfasst das
Gestensteuerungsmodul mindestens eine zusätzliche Infrarot-Leuchtdiode mit einer Lichtemissionsintensität, die geringer als eine Lichtemissionsintensität der mindestens zwei Infrarot-Leuchtdioden ist, und der Mittenabstand zwischen der zusätzlichen Infrarot-Leuchtdiode und der Infrarot-Empfängerröhre liegt innerhalb von 20 mm. Hier wird die mindestens eine zusätzliche Infrarot-Leuchtdiode verwendet, um eine zusätzliche Berührungsfunktion zu implementieren, und wird nachstehend als Infrarot-Leuchtdiode zur Berührung bezeichnet, und dementsprechend werden die mindestens zwei Infrarot-Leuchtdioden als Infrarot-Leuchtdioden zur Gestensteuerung bezeichnet. Die Infrarot-Leuchtdiode zur Berührung und die Infrarot-Leuchtdioden zur Gestensteuerung verwenden die eine Infrarot-Empfängerröhre gemeinsam. Demgemäß wird eine doppelte Funktion eines Moduls zu geringeren Kosten umgesetzt.

Die Infrarot-Leuchtdiode zur Berührung hat eine geringere Lichtausstrahlleistung als diejenige der Infrarot-Leuchtdioden zur Gestensteuerung. Mit anderen Worten ist der Erkennungsabstand, der von der Infrarot-Leuchtdiode zur Berührung erreicht wird, kleiner als der Gestensteuerungsabstand. Durch Auswählen der Lichtausstrahlleistung der Infrarot-Leuchtdiode zur Berührung kann, nur in dem Fall, in dem der Benutzer mit der Oberfläche des Gestensteuerungsmoduls in Kontakt ist, das dadurch emittierte Infrarotlicht zur Infrarot-Empfängerröhre reflektiert werden, wodurch das Gestensteuerungsmodul ausgelöst wird. Passend zur Größe eines menschlichen Fingers ist der Mittenabstand zwischen der Infrarot-Leuchtdiode zur Berührung und der Infrarot-Empfängerdiode zur Gestensteuerung als innerhalb 20 mm liegend spezifiziert. Hier kann eine Lichtbegrenzungsstruktur für die Infrarot-Leuchtdiode zur Berührung bereitgestellt werden. Die Lichtbegrenzungsstruktur blockiert jedoch die Infrarot-Leuchtdiode zur Berührung in Bezug auf einen Lichtaustritt zur Infrarot-Empfängerröhre innerhalb des Moduls, ohne den Durchlasswinkel der Infrarot-Leuchtdiode zur Berührung komplett zu begrenzen. Daher ist es bevorzugt, dass die Infrarot-Leuchtdiode zur Berührung mit einer Lichtbegrenzungsstruktur mit einer konisch erweiterten Form versehen ist.

Nach einer weiteren Ausführungsform der vorliegenden Offenbarung haben, um die Gestensteuerungsfunktion und die Berührungsfunktion unter Verwendung desselben Satzes von Infrarot-Leuchtdioden zu implementieren, die mindestens zwei Infrarot-Leuchtdioden mindestens zwei Sätze von parallelen Treiberkreisen zum Betreiben der Infrarot-Leuchtdioden mit verschiedenen Strömen zu verschiedenen Zeiten. Die Gestensteuerung und die Berührungssteuerung werden unter Verwendung desselben Satzes von Infrarot-Leuchtdioden nach Art und Weise eines Zeitmultiplexverfahrens implementiert. Demgemäß ist es möglich, auf die oben beschriebene Infrarot-Leuchtdiode zur Berührung zu verzichten, wodurch eine Integration der oben beschriebenen Berührungsfunktion zu geringeren Kosten erreicht wird. Hier werden insbesondere zwei Sätze von Treiberkreisen verwendet, die den Infrarot-Leuchtdioden abwechselnd einen starken Strom und einen schwachen Strom zuführen können, wodurch abwechselnd eine starke Lichtemissionsintensität und eine schwache Lichtemissionsintensität auf derselben Leuchtdiode erzeugt werden. Dabei ist das von einem starken Strom angetriebene Signal für die Gestenbeurteilung stark. Das von einem schwachen Strom angetriebene Signal ist für eine Berührungsbeurteilung schwach.

Nach einer Ausführungsform der vorliegenden Offenbarung umfasst das Gestensteuerungsmodul eine sichtbares Licht emittierende Vorrichtung, die für mindestens eines von dem Anzeigen einer Position, eines Betriebs des Gestensteuerungsmoduls und dem Bereitstellen einer Rückkopplung für die erkannte Geste verwendet wird.

Im Stand der Technik ist das Gestensteuerungsmodul nicht mit einer Anzeigevorrichtung versehen, sondern zeigt die Position des Gestensteuerungsmoduls derart, dass auf dem Bedienungsfeld ein Etikett angebracht oder ein Symbol aufgedruckt ist. Das angebrachte Etikett kann jedoch leicht verloren gehen, wodurch der Benutzer nicht die genaue Position des Gestensteuerungsmoduls kennt. Durch das Aufdrucken eines Symbols wird eine dauerhafte Anzeige auch nach dem Abschalten erreicht. Außerdem wird nahe des Gestensteuerungsmoduls oder an anderen Mensch-Computer-Interaktionsschnittstellen zum Ausführen einer Rückkopplung zu erkannten Gesten eine durch LED gepunktete Anzeige bereitgestellt. Bei diesen Befehlen ist es jedoch für den Benutzer schwierig, eine intuitive Verbindung zu schaffen, so dass der Lernaufwand für den Benutzer recht hoch ist.

Um den Stand der Technik zu verbessern, weist das Gestensteuerungsmodul der vorliegenden Offenbarung eine sichtbares Licht emittierende Vorrichtung auf. Die sichtbares Licht emittierende Vorrichtung kann eine statische oder dynamische Lichtemissionsvorrichtung mit einer geometrischen Form sein. Die geometrische Form, die von der Lichtemissionsvorrichtung angezeigt wird, kann eine Linienform, eine Streifenform, ein geschlossener oder nicht geschlossener Kreis, eine Schleife, ein Dreieck, ein Quadrat, ein Symbol, ein Diagramm oder ein Muster sein. Im Betrieb kann die Lichtemissionsvorrichtung eine statische Beleuchtung, ein Flackern, eine Farbveränderung, eine Helligkeitsveränderung ausführen und dynamische Effekte, wie atmende Lichter, laufende Lichter oder Laufrahmenlichter, bilden. Dynamische Effekte können dem Benutzer intuitivere Aufforderungszeichen geben, wodurch sich der Lernaufwand für den Benutzer verringert. Die sichtbares Licht emittierende Vorrichtung wird vorzugsweise durch eine oder mehrere sichtbares Licht emittierende Dioden innerhalb eines sichtbaren Lichtbereichs sowie entsprechende optische Vorrichtungen, wie einen Lichtleitkörper, einen Lichtleithohlraum, eine sichtbares Licht streuende Schicht und dergleichen implementiert. Von diesen können der Lichtleitkörper oder der Lichtleithohlraum in der Frontabdeckung integriert sein, um die Materialkosten und die Montagekosten einzusparen.

Zum Beispiel ist es am einfachsten, die Position des Gestensteuerungsmoduls durch eine sichtbares Licht emittierende Diode anzuzeigen. Außerdem ist es möglich, einen Betrieb des Auslösens des Gestensteuerungsmoduls in Form einer Helligkeitsveränderung, einer Farbveränderung oder eines laufenden Lichts zu verwenden, zum Beispiel eine nach links gerichtete Welle oder eine nach rechts gerichtete Welle in Form eines laufenden Lichts auszulösen, die zum Beispiel auf einer Seite der Gestenerkennungsfläche angeordnet ist. Es ist auch möglich, eine leichte Rückkopplung der Geste, die erkannt wurde, flackernd auszuführen, zum Beispiel ein zweifaches Flackern, um dem Benutzer anzuzeigen, dass eine Geste erkannt wurde.

Gemäß einer bevorzugten Ausführungsform der vorliegenden Offenbarung umfasst die sichtbares Licht emittierende Vorrichtung eine sichtbares Licht emittierende Diode, die innerhalb der Lichtbegrenzungsstruktur angeordnet ist. Hier ist mindestens eine sichtbares Licht emittierende Diode innerhalb einer Lichtbegrenzungsstruktur der Infrarot-Leuchtdioden und/oder der Infrarot-Empfängerröhre angeordnet. Bei einer solchen Konfiguration ist die Durchlassfläche des sichtbaren Lichts auch darauf begrenzt, eine genaue Position zur Gestenerkennung anzuzeigen, ohne diese mit einem dedizierten Lichtleitkörper oder Lichtleithohlraum zu versehen. Demgemäß werden die Herstellungskosten und die Montagekosten eingespart.

Nach einer Ausführungsform der vorliegenden Offenbarung ist das Gestensteuerungsmodul in der Lage, mindestens eine der folgenden Gesten oder eine Kombination von diesen zu erkennen:
- Schweben (Hover);
- Welle;
- einfacher Schlag;
- doppelter Schlag,
- Anheben.

Hier stellt die Schwebegeste dar, dass ein Objekt (eine Hand oder ein anderes Objekt), das erkannt werden soll, sich dem Gestensteuerungsmodul allmählich von ferne in einem bestimmten Abstandsbereich mit einer bestimmten Geschwindigkeit nähert und während einer bestimmten Zeit innerhalb eines bestimmten Abstandsbereichs auf der Oberfläche von diesem innehält. Die Welle schließt eine Welle nach links, eine Welle nach rechts, eine Welle nach oben und eine Welle nach unten ein und stellt dar, dass ein Objekt (eine Hand oder ein anderes Objekt), das erkannt werden soll, sich von einer Infrarot-Leuchtdiode zu einer anderen Infrarot-Leuchtdiode mit einer bestimmten Geschwindigkeit innerhalb eines bestimmten Abstandsbereichs des Gestensteuerungsmoduls bewegt. Der einfache Schlag stellt dar, dass ein Objekt (eine Hand oder ein anderes Objekt), das erkannt werden soll, sich allmählich dem Gestensteuerungsmodul von ferne in einem bestimmten Abstandsbereich mit einer bestimmten Geschwindigkeit nähert und für eine bestimmte Zeit innerhalb eines bestimmten Abstandsbereichs von der Oberfläche des Gestensteuerungsmoduls innehält und sich dann allmählich von dem Gestensteuerungsmodul mit einer bestimmten Geschwindigkeit weg bewegt. Der doppelte Schlag stellt dar, dass einfache Schlagaktionen innerhalb einer bestimmten Zeit wiederholt werden, das heißt, ein Objekt (eine Hand oder ein anderes Objekt), das erkannt werden soll, nähert sich allmählich dem Gestensteuerungsmodul von ferne in einem bestimmten Abstandsbereich mit einer bestimmten Geschwindigkeit und hält für eine bestimmte Zeit innerhalb eines bestimmten Abstandsbereichs von der Oberfläche des Gestensteuerungsmoduls inne, bewegt sich allmählich von dem Gestenbestimmungsmodul innerhalb eines bestimmten Bereichs mit einer bestimmten Geschwindigkeit in die Ferne und hält für eine bestimmte Zeit inne und nähert sich dann allmählich dem Gestensteuerungsmodul mit einer bestimmten Geschwindigkeit und hält für eine bestimmte Zeit innerhalb eines bestimmten Abstandsbereichs von der Oberfläche des Gestensteuerungsmoduls inne. Das Anheben stellt dar, dass ein Objekt (eine Hand oder ein anderes Objekt), das erkannt werden soll, von einem bestimmten Abstandsbereich von der Oberfläche des Gestensteuerungsmoduls beginnt und sich allmählich von dem Gestensteuerungsmodul mit einer bestimmten Geschwindigkeit weg bewegt.

Gemäß der vorliegenden Offenbarung können mindestens vier Gesten durch Beurteilen von verschiedenen Parametern unter der Anordnung, die zwei Infrarot-Leuchtdioden und eine Infrarot-Empfängerdiode umfasst, erkannt werden. Allgemein ausgedrückt sind vier Gesten ausreichend, um übliche Funktionen der meisten Haushaltsgeräte zu steuern.

Die oben beschriebene Gestenerkennung kann die Zuverlässigkeit durch umfassende Beurteilung von mehreren Parametern verbessern. Zum Beispiel ist es möglich, durch Hinzufügen der Beurteilung einer allmählichen Annäherung durch "allmähliches Annähern von ferne in einem bestimmten Abstandsbereich mit einer bestimmten Geschwindigkeit" in der Schwebegeste die Zuverlässigkeit wirksam zu verbessern und insbesondere die Störung des Dampfes zu eliminieren. Außerdem ist es möglich, bei Kombination der Beurteilungen durch "allmähliches Annähern von ferne in einem bestimmten Abstandsbereich mit einer bestimmten Geschwindigkeit" und "Innehalten für eine bestimmte Zeit innerhalb eines bestimmten Abstandsbereichs von der Oberfläche des Gestensteuerungsmoduls" die durch den Kopf einer Person verursachte Störung wirksam herauszufiltern. Bei einem weiteren Beispiel können, bei einer einfachen Schlaggeste, die Beurteilungen dieser Inhalte durch "allmähliches Annähern von ferne in einem bestimmten Abstandsbereich mit einer bestimmten Geschwindigkeit", "Innehalten für eine bestimmte Zeit innerhalb eines bestimmten Abstandsbereichs von der Oberfläche des Gestensteuerungsmoduls" und "allmähliches Wegbewegen von dem Gestensteuerungsmodul mit einer bestimmten Geschwindigkeit" sehr zuverlässig die durch den Dampf, die Umgebungslichtveränderung sowie das Annähern oder die Bewegung des Kopfes einer Person verursachte Störung herausfiltern.

Nach einer Ausführungsform der vorliegenden Offenbarung umfasst das Gestensteuerungsmodul eine Oberflächenschicht, die mit einer für Infrarot durchlässigen Tinte und/oder einer sichtbares Licht streuenden Tinte versehen ist. Dabei ist die für Infrarot durchlässige Tinte schwarz oder dunkel. Die Oberfläche der sichtbares Licht streuenden Tinte ist schwarz oder dunkel und die Lichtstreuung der punktartigen sichtbaren Lichtquelle ist eine planare Beleuchtung. Die mit der für Infrarot durchlässigen Tinte versehene Fläche entspricht der Fläche, wo sich die Infrarot-Leuchtdioden und/oder die Infrarot-Empfängerröhre befindet/befinden, und die Fläche, die mit der sichtbares Licht streuenden Tinte versehen ist, entspricht der Fläche, wo sich die sichtbares Licht emittierende Vorrichtung befinden kann. Die Oberflächenschicht ist zwischen dem Gestensteuerungsmodul und dem Bedienfeld-Sichtfenster montiert, insbesondere in der Oberfläche der Frontabdeckung montiert oder in der Frontabdeckung integriert. Außerdem kann eine schwarzes Licht abschirmende Tintenfläche vorgesehen sein, die die gesamte Oberfläche des Gestensteuerungsmoduls zusammen mit der für Infrarot durchlässigen Tinte und/oder der sichtbares Licht streuenden Tinte bedeckt, wodurch eine einheitliche Erscheinung des Gestensteuerungsmoduls und insbesondere ein Vollschwarzeffekt, wenn die Lichter ausgeschaltet sind, erreicht wird.

Gemäß einem weiteren Aspekt der vorliegenden Offenbarung ist ein Haushaltsgerät vorgesehen, das das Gestensteuerungsmodul gemäß der vorliegenden Offenbarung umfasst. Gemäß einer Ausführungsform der vorliegenden Offenbarung ist das Haushaltsgerät eine Dunstabzugshaube, ein Kühlschrank, ein Ofen, ein Küchenmixer, eine Waschmaschine, ein intelligenter Wasserhahn oder eine intelligente Toilette. Der Betrieb der oben beschriebenen Haushaltsgeräte kann durch das berührungslose Gestensteuerungsmodul der vorliegenden Offenbarung ohne Berührung durch die Hand erfolgen. Infolgedessen ist es möglich, insbesondere die Küche oder das Badezimmer sauber und hygienisch zu halten.

Nach einer Ausführungsform der vorliegenden Offenbarung wird mindestens eine der folgenden Funktionen des Haushaltsgeräts gemäß einer Geste gesteuert, die von dem Gestensteuerungsmodul erkannt wird:
- Einschalten/Ausschalten
- Einschalten/Ausschalten eines Lichts;
- Öffnen/Schließen einer Tür;
- Erhöhen/Absenken;
- Einschalten/Ausschalten eines Ventils;
- spezielle Funktion.

Insbesondere ist vorgesehen, dass mindestens zwei Funktionen des Haushaltsgeräts durch mindestens zwei Gesten gesteuert werden, die von dem Gestensteuerungsmodul der vorliegenden Offenbarung erkannt werden, und mindestens fünf Funktionen des Haushaltsgeräts jeweils durch die fünf von dem Gestensteuerungsmodul erkannten Gesten umgesetzt werden. Im Stand der Technik ist es nur möglich, ein oder zwei Gesten an Stelle einer berührungslosen Steuerung aller üblichen Funktionen der Dunstabzugshaube zu implementieren, so dass das Problem der Verunreinigung, das durch das Berühren der Knöpfe verursacht wird, nicht vollständig vermieden werden kann. Durch Verwendung des Gestensteuerungsmoduls der vorliegenden Offenbarung, das mehrere Gesten unterstützt, ist es möglich, eine berührungslose Steuerung von üblichen Funktionen von Haushaltsgeräten, insbesondere der Dunstabzugshaube, ohne Berührung des Bedienfelds der Dunstabzugshaube zu geringen Kosten zu implementieren, wodurch jegliche verursachte Verunreinigung verhindert wird.

Nehmen wir die Dunstabzugshaube als Beispiel. Eine Schwebegeste wird verwendet, um das Einschalten/Ausschalten zu steuern; eine einfache Schlaggeste wird verwendet, um ein Licht ein-/auszuschalten; eine Wellengeste wird verwendet, um die Luftgeschwindigkeit zu erhöhen/zu verringern; eine doppelte Schlaggeste wird verwendet, um eine besondere Funktion auszulösen, zum Beispiel "Knopf zum Anbraten (eine maximale Luftgeschwindigkeit einschalten)" oder "automatisches Durchschalten (automatisches Einstellen einer Luftgeschwindigkeit gemäß der Konzentration des Dampfes)".

Nehmen wir den Kühlschrank als Beispiel. Die Tür kann unter Verwendung einer Schwebegeste, einer einfachen Schlaggeste oder einer Wellengeste automatisch geöffnet werden. Zu diesem Zeitpunkt ist es möglich, das Öffnen der Tür berührungslos zu steuern. Wenn zum Beispiel beide Hände schmutzig sind, muss die Tür nicht berührt werden, um eine Verunreinigung von dieser zu vermeiden. Wenn in beiden Händen Nahrungsmittel gehalten werden, ist es auch möglich, das Öffnen der Tür berührungslos unter Verwendung einer Armgeste zu steuern, um es für den Benutzer bequem zu machen.

Nehmen wir einen intelligenten Wasserhahn als Beispiel. Das Wasserventil kann unter Verwendung einer Schwebegeste oder einer einfachen Schlaggeste ein- oder ausgeschaltet werden, während eine Wasserausflussgeschwindigkeit durch eine Wellengeste erhöht oder verringert wird. Alternativ wird das Wasserventil durch eine einfache Schlaggeste ein- oder ausgeschaltet, und in diesem Zustand wird die Wasserausflussgeschwindigkeit durch eine Wellengeste erhöht oder verringert. Das Heißwasserventil wird durch eine Schwebegeste ein- oder ausgeschaltet, und in diesem Zustand wird die Wasserausflusstemperatur durch eine Wellengeste erhöht oder gesenkt. Auf diese Weise kann der Benutzer, wenn beide Hände schmutzig sind, die Funktionen so steuern, dass er den Wasserhahn ein- oder ausschaltet, ohne das Wasserhahnventil berühren zu müssen.

Weitere Ausführungsbeispiele der Erfindung werden anhand der Zeichnungen beschrieben.
- FIG. 1a: zeigt eine Querschnittsansicht eines Gestensteuerungsmoduls nach einer Ausführungsform der vorliegenden Offenbarung;
- FIG. 1b: zeigt eine Draufsicht eines Gestensteuerungsmoduls nach einer Ausführungsform der vorliegenden Offenbarung;
- FIG. 2a: zeigt eine Querschnittsansicht eines Gestensteuerungsmoduls nach einer weiteren Ausführungsform der vorliegenden Offenbarung;
- FIG. 2b: zeigt eine Draufsicht eines Gestensteuerungsmoduls nach einer weiteren Ausführungsform der vorliegenden Offenbarung;
- FIG. 3a: zeigt eine Querschnittsansicht eines Gestensteuerungsmoduls nach einer anderen Ausführungsform der vorliegenden Offenbarung;
- FIG. 3b: zeigt eine Draufsicht eines Gestensteuerungsmoduls nach einer anderen Ausführungsform der vorliegenden Offenbarung;
- FIG. 4: zeigt eine schematische Ansicht eines Treiberkreises für ein Gestensteuerungsmodul nach der vorliegenden Offenbarung;
- FIG. 5a: ist eine Querschnittsansicht eines Gestensteuerungsmoduls nach noch einer weiteren Ausführungsform der vorliegenden Offenbarung;
- FIG. 5b: zeigt eine Draufsicht eines Gestensteuerungsmoduls nach noch einer weiteren Ausführungsform der vorliegenden Offenbarung;
- FIG. 6: zeigt eine Draufsicht eines Gestensteuerungsmoduls nach einer bevorzugten Ausführungsform der vorliegenden Offenbarung; und
- FIG. 7: zeigt eine Explosionsansicht eines Gestensteuerungsmoduls nach einer Ausführungsform der vorliegenden Offenbarung.

Als Einleitung ist zunächst anzumerken, dass in verschiedenen Ausführungsformen in verschiedenen Beschreibungen die gleichen Elemente mit den gleichen Bezugszeichen oder den gleichen Fachbegriffen versehen sind, wobei die Offenbarung, die in der Gesamtheit der Beschreibung enthalten ist, semantisch zur Verwendung in den gleichen Elementen, die mit den gleichen Bezugszeichen oder den gleichen Fachbegriffen versehen sind, übertragen werden kann. Außerdem sind die Positionsbeschreibungen, die in der Beschreibung gewählt wurden, wie oben, unten, links, rechts, Seite und dergleichen, relativ zu den direkten Beschreibungen und den beigefügten gezeigten Zeichnungen, und wenn es Änderungen dieser Position gibt, können diese Positionsbeschreibungen semantisch zur Verwendung in neuen Positionen übertragen werden.

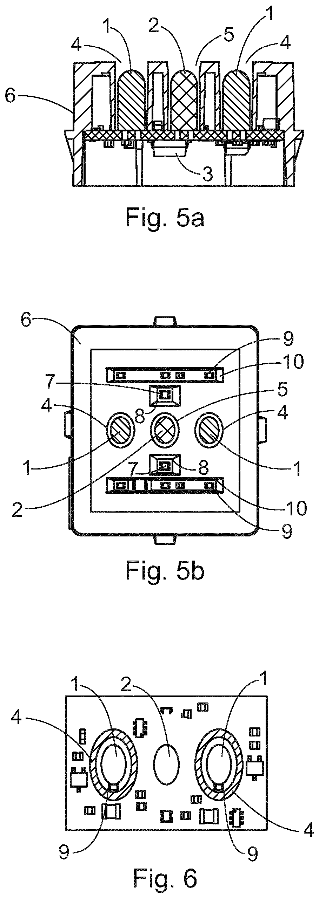

Außerdem ist darauf hinzuweisen, dass die im anhängenden Anspruch 1 definierte Erfindung inklusive der zusätzlichen Infrarot-Leuchtdiode zur Berührung nur in Fig. 5b veranschaulicht ist. Alle anderen Figuren dienen dem Hintergrund und dem besseren Verständnis der Erfindung. Außerdem enthalten die anderen Figuren verschiedene vorteilhafte Merkmale, die gemäß dem anhängenden Anspruchssatz auch in der Ausführungsform von Fig. 5b enthalten sind bzw. optional mit der Ausführungsform von Fig. 5b kombiniert werden können.

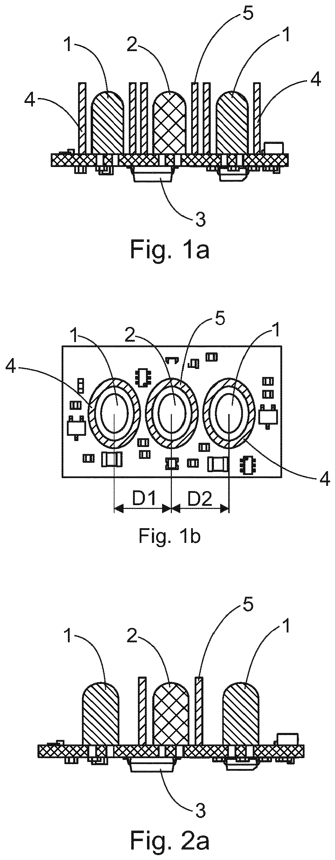

FIG. 1a zeigt eine Querschnittsansicht eines Gestensteuerungsmoduls nach einer Ausführungsform der vorliegenden Offenbarung; und FIG. 1b zeigt eine Draufsicht des Gestensteuerungsmoduls, das in Fig. 1a gezeigt ist. Hier sind nur die Hauptelemente schematisch gezeigt, während die Frontabdeckung, das Gehäuse und dergleichen des Gestensteuerungsmoduls weggelassen wurden.

Wie in den Figuren 1a und 1b gezeigt ist, ist eine Infrarot-Empfängerröhre 2 zwischen zwei Infrarot-Leuchtdioden 1 vorgesehen. Die zwei Infrarot-Leuchtdioden 1 sind jeweils von einer Lichtbegrenzungsstruktur 4 für die Infrarot-Leuchtdioden 1 umgeben, und die Infrarot-Empfängerröhre 2 ist von einer Lichtbegrenzungsstruktur 5 für die Infrarot-Empfängerröhre 2 umgeben. Die Infrarot-Leuchtdioden 1, die Infrarot-Empfängerröhre 2, die Lichtbegrenzungsstruktur 4 und die Lichtbegrenzungsstruktur 5 sind jeweils auf einer Seite der Leiterplatte angeordnet, und ein Signalprozessor 3 ist auf der anderen Seite der Leiterplatte angeordnet. Es sind auch andere elektronische Elemente auf der Leiterplatte vorgesehen. Hier können, obwohl nur zwei Infrarot-Leuchtdioden gezeigt sind, auch mehr Infrarot-Leuchtdioden verwendet werden, und diese Infrarot-Leuchtdioden können gleichmäßig oder ungleichmäßig um die Infrarot-Empfängerröhre verteilt sein.

Die Lichtbegrenzungsstruktur 4 und die Lichtbegrenzungsstruktur 5, die in den Zeichnungen gezeigt sind, haben jeweils die Form eines zylindrischen Hohlkörpers. Es können jedoch auch andere Geometrien, wie Hohlprismen oder konisch erweiterte zylindrische Strukturen, verwendet werden. Die Höhe der Lichtbegrenzungsstruktur 4 und der Lichtbegrenzungsstruktur 5 ist größer als die der Infrarot-Leuchtdioden 1 und der Infrarot-Empfängerröhre 2, sie können jedoch auch mit den oberen Enden der Infrarot-Leuchtdioden 1 und der Infrarot-Empfängerröhre 2 fluchtend angeordnet sein.

Die Bezugszeichen D1 und D2 in FIG. 1b kennzeichnen jeweils die Mittenabstände zwischen der linken und der rechten Infrarot-Leuchtdiode 1 und der Infrarot-Empfängerröhre 2. Gemäß der vorliegenden Offenbarung ist spezifiziert, dass D1 und D2 im Bereich zwischen 5 mm und 50 mm liegen.

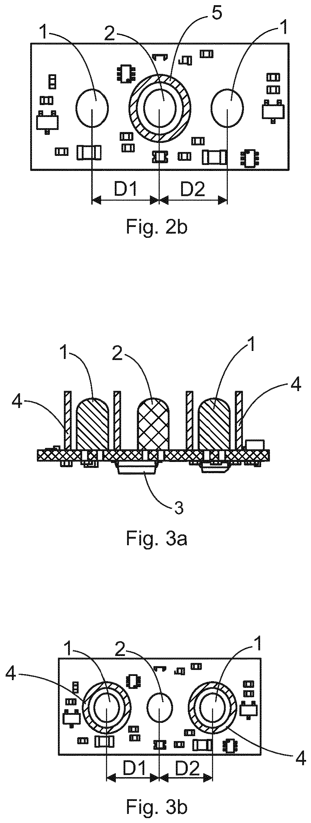

FIG. 2a zeigt eine Querschnittsansicht eines Gestensteuerungsmoduls nach einer weiteren Ausführungsform der vorliegenden Offenbarung; und FIG. 2b zeigt eine Draufsicht des Gestensteuerungsmoduls, das in Fig. 2a gezeigt ist. Die Figuren 2a und 2b zeigen ein Gestensteuerungsmodul ähnlich wie in den Figuren 1a und 1b. Der Unterschied besteht jedoch darin, dass in den Figuren 2a und 2b nur die Infrarot-Empfängerröhre 2 mit der Lichtbegrenzungsstruktur 5 versehen ist, während die Infrarot-Leuchtdioden 1 nicht mit einer entsprechenden Lichtbegrenzungsstruktur versehen sind.

FIG. 3a zeigt eine Querschnittsansicht eines Gestensteuerungsmoduls nach einer anderen Ausführungsform der vorliegenden Offenbarung; und FIG. 3b zeigt eine Draufsicht des Gestensteuerungsmoduls, das in Fig. 3a gezeigt ist. Die Figuren 3a und 3b zeigen auch ein Gestensteuerungsmodul ähnlich wie in den Figuren 1a und 1b. Der Unterschied besteht jedoch darin, dass in den Figuren 3a und 3b nur die zwei Infrarot-Leuchtdioden 1 mit der Lichtbegrenzungsstruktur 4 versehen sind, während die Infrarot-Empfängerröhre 2 nicht mit einer entsprechenden Lichtbegrenzungsstruktur versehen ist.

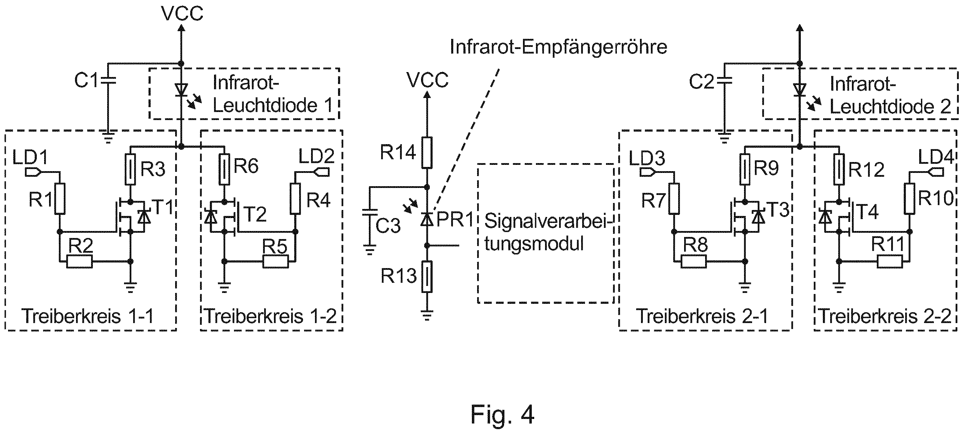

FIG. 4 zeigt eine schematische Ansicht eines Treiberkreises für ein Gestensteuerungsmodul nach der vorliegenden Offenbarung. Die Treiberkreise für zwei Infrarot-Leuchtdioden sind auf der linken bzw. der rechten Seite in FIG. 4 gezeigt. Um die Gestensteuerungsfunktion und die Berührungsfunktion, die denselben Satz von Infrarot-Leuchtdioden verwenden, zu implementieren, ist wohl ersichtlich, dass die Infrarot-Leuchtdioden jeweils mindestens zwei Sätze von parallelen Treiberkreisen zum Betreiben der Infrarot-Leuchtdioden mit verschiedenen Strömen zu verschiedenen Zeiten aufweisen. Zum Beispiel ist es in dem Treiberkreis 1-1 möglich, einen Widerstandswert und/oder ein Transistormodell auszuwählen, das sich von dem Treiberkreis 1-2 unterscheidet, sodass die damit verbundenen Infrarot-Leuchtdioden mit verschiedenen Strömen betrieben werden können. Die Treiberkreise 2-1 und 2-2 sind somit auch vorgesehen.

FIG. 5a zeigt eine Querschnittsansicht eines Gestensteuerungsmoduls nach noch einer weiteren Ausführungsform der vorliegenden Offenbarung; und FIG. 5b zeigt eine Draufsicht des Gestensteuerungsmoduls, das in Fig. 5a gezeigt ist.

Im Gegensatz zu den Figuren 1a bis 3b ist die Frontabdeckung 6 des Gestensteuerungsmoduls zusätzlich in den Figuren 5a und 5b gezeigt. Die Lichtbegrenzungsstruktur 4 für die Infrarot-Leuchtdioden 1 und die Lichtbegrenzungsstruktur 5 für die Infrarot-Empfängerröhre 2 sind integral auf der Frontabdeckung 6 ausgebildet.

FIG. 5b zeigt auch die erfindungsgemäß zusätzlich integrierte Infrarot-Leuchtdiode 7 zur Berührung mit einer Lichtemissionsintensität, die geringer als eine Lichtemissionsintensität der Infrarot-Leuchtdioden 1 ist, und der Mittenabstand zwischen der Infrarot-Leuchtdiode 7 zur Berührung und der Infrarot-Empfängerröhre 2 liegt innerhalb von 20 mm. Obwohl FIG. 5b zeigt, dass sich die Infrarot-Leuchtdioden 1 zur Gestensteuerung auf der linken und der rechten Seite der Infrarot-Empfängerröhre 2 befinden und sich die Infrarot-Leuchtdioden 7 zur Berührung auf der oberen und der unteren Seite der Infrarot-Empfängerröhre 2 befinden, sind auch andere Anordnungen möglich. Zum Beispiel befindet sich eine Infrarot-Leuchtdiode zur Berührung zwischen einer Infrarot-Leuchtdiode 1 zur Gestensteuerung und der Infrarot-Empfängerröhre 2. Die Infrarot-Leuchtdiode 7 zur Berührung hat auch ihre Lichtbegrenzungsstruktur 8. Es ist in FIG. 5b zu sehen, dass die Lichtbegrenzungsstruktur so vorgesehen ist, dass sie sich nach oben erweitert oder konisch erweitert ist.

Außerdem zeigt FIG. 5b auch sichtbares Licht emittierende Vorrichtungen über und unter der Infrarot-Empfängerröhre 2, um eine Position, einen Betrieb des Gestensteuerungsmoduls anzuzeigen und/oder für die erkannte Geste eine Rückkopplung bereitzustellen. Die sichtbares Licht emittierende Vorrichtung umfasst hier drei LEDs 9 mit sichtbarem Licht, die unabhängig voneinander die Helligkeit steuern können, sowie einen Lichtleithohlraum 10.

Hier wird die Anzeige der sichtbares Licht emittierenden Vorrichtung in verschiedenen Zuständen beispielhaft beschrieben. Wenn sich das Gestenerkennungsmodul im Standby befindet, strahlt eine oder strahlen mehrere LEDs in der sichtbares Licht emittierenden Vorrichtung kontinuierlich ein schwaches Licht oder Flackern aus, um dem Benutzer den Gestenerkennungsbereich anzuzeigen. Wenn das Gestenerkennungsmodul eine Schwebegeste als Einschaltbefehl erkennt, ist es möglich, eine Helligkeitsverstärkung oder eine Farbveränderung der Lichtausstrahllinien auszuführen. Wenn eine nach links oder nach rechts gerichtete Wellenbewegung erkannt wird, ist es möglich, drei LED-Lichter nacheinander in einer bestimmten Reihenfolge als Rückkopplung für das Erkennen einer Wellengeste leuchten zu lassen. Wenn eine einfache Schlaggeste erkannt wird, ist es möglich, die sichtbares Licht emittierende Vorrichtung als Rückkopplung für das Erkennen einer einfachen Schlaggeste schnell aufblitzen zu lassen.

In der vorliegenden Offenbarung ist die sichtbares Licht emittierende Vorrichtung nicht auf den in FIG. 5b gezeigten LED-Streifen begrenzt. Es kann ins Auge gefasst werden, dass der Lichtausstrahlbereich andere eingeschlossene oder nicht eingeschlossene Formen, die den Gestenerkennungsbereich umgeben, aufweisen kann, wie kreisförmige Lichtausstrahllinien. Die Art der Rückkopplung der sichtbares Licht emittierenden Vorrichtung für die Erkennung einer Geste kann auch in anderen Kombinationen vorliegen.

FIG. 6 zeigt eine Draufsicht eines Gestensteuerungsmoduls nach einer bevorzugten Ausführungsform der vorliegenden Offenbarung. Hier ist die LED 9 der sichtbares Licht emittierenden Vorrichtung zwischen den Infrarot-Leuchtdioden 1 und ihrer Lichtbegrenzungsstruktur 4 angeordnet. Somit bildet die Lichtbegrenzungsstruktur 4 auch einen Lichtleitdurchgang für sichtbares Licht. Die in FIG. 6 gezeigte Anordnung kann das funktionelle Integrationsmaß der Lichtbegrenzungsstruktur verbessern und die Herstellungskosten sowie die Montagekosten verringern.

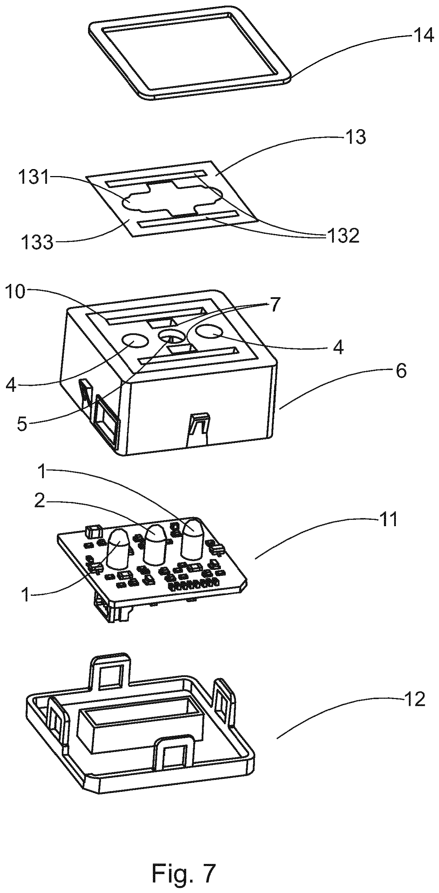

FIG. 7 zeigt eine Explosionsansicht eines Gestensteuerungsmoduls nach einer Ausführungsform der vorliegenden Offenbarung. In FIG. 7 sind die Verschlussdichtung 14, die Oberflächenschicht 13, die Frontabdeckung 6, die Leiterplatte 11, die mit den Infrarot-Leuchtdioden 1 und der Infrarot-Empfängerröhre 2 versehen ist, und die Rückabdeckung 12 jeweils von oben nach unten gezeigt. Ähnlich den Strukturen der Figuren 5a und 5b integriert die Frontabdeckung 6 die Lichtbegrenzungsstruktur 4 für die Infrarot-Leuchtdioden 1, die Lichtbegrenzungsstruktur 5 für die Infrarot-Empfängerröhre 2, die Lichtbegrenzungsstruktur 8 für die Infrarot-Leuchtdiode 7 zur Berührung, den Lichtleithohlraum 10 für die sichtbares Licht emittierende Vorrichtung und eine Schnittstelle zur Verdrahtung. Die Frontabdeckung wird vorzugsweise integral hergestellt, um die Anzahl der Teile und die Montagekosten zu senken.

Es ist auch in FIG. 7 zu sehen, dass die auf der Frontabdeckung 6 angeordnete Oberflächenschicht 13 jeweils einen für Infrarot durchlässigen Tintenbereich 131, einen sichtbares Licht streuenden Tintenbereich 132 und einen schwarzes Licht abschirmenden Tintenbereich 133 einschließt. Der für Infrarot durchlässige Tintenbereich 131 entspricht dem Bereich, wo die Infrarot-Leuchtdioden/Infrarot-Empfängerröhre vorgesehen sind, während der sichtbares Licht streuende Tintenbereich 132 dem Bereich entspricht, wo die sichtbares Licht emittierende Vorrichtung vorgesehen ist. Der schwarzes Licht abschirmende Tintenbereich 133, der in dem übrigen Bereich vorgesehen ist, bedeckt alle Bereiche der Oberflächenschicht 13 zusammen mit dem für Infrarot durchlässigen Tintenbereich und/oder dem sichtbares Licht streuenden Tintenbereich, wodurch eine gleichmäßige Erscheinung des Gestensteuerungsmoduls, und insbesondere ein Vollschwarzeffekt, wenn die Lichter ausgeschaltet sind, erreicht wird.

## Patentansprüche

1. Gestensteuerungsmodul, basierend auf dem Infrarotreflexionsprinzip, umfassend:
- mindestens zwei Infrarot-Leuchtdioden (1);
- eine Infrarot-Empfängerröhre (2); und
- einen Signalprozessor (3) zum Erkennen einer Geste basierend auf einem Signal der Infrarot-Empfängerröhre (2),
wobei die Infrarot-Empfängerröhre (2) zwischen den jeweiligen Infrarot-Leuchtdioden (1) angeordnet ist und ein Mittenabstand (D1, D2) zwischen den Infrarot-Leuchtdioden (1) und der Infrarot-Empfängerröhre (2) zwischen 5 mm und 50 mm liegt,
**dadurch gekennzeichnet, dass**
die Infrarot-Leuchtdioden (1) und/oder die Infrarot-Empfängerröhre (2) von einer Lichtbegrenzungsstruktur (4, 5) umgeben sind, wobei die Lichtbegrenzungsstruktur (4,5) mit einem oberen Ende der Infrarot-Leuchtdioden (1) und/oder der Infrarot-Empfängerröhre (2) fluchtet oder höher als dieses liegt; und
das Gestensteuerungsmodul mit einer Berührungsfunktion integriert ist, welche mindestens eine zusätzliche Infrarot-Leuchtdiode zur Berührung (7) mit einer Lichtemissionsintensität, die geringer als die Lichtemissionsintensität der mindestens zwei Infrarot-Leuchtdioden (1) ist, umfasst, wobei der Mittenabstand zwischen der zusätzlichen Infrarot-Leuchtdiode zur Berührung (7) und der Infrarot-Empfängerröhre (2) innerhalb von 20 mm liegt, und wobei die mindestens zwei Infrarot-Leuchtdioden zur Gestensteuerung (1) und die mindestens eine zusätzliche Infrarot-Leuchtdiode zur Berührung (7) die eine Infrarot-Empfängerröhre (2) gemeinsam verwenden.

2. Gestensteuerungsmodul gemäß Anspruch 1, **dadurch gekennzeichnet, dass** die Lichtbegrenzungsstruktur (4, 5) als Hohlzylinder, Hohlprisma, hohler Kegelstumpf oder hohler Pyramidenstumpf ausgebildet ist; und/oder die Lichtbegrenzungsstruktur (4, 5) als Hohlzylinder, Hohlprisma, hohler Kegelstumpf oder hohler Pyramidenstumpf, der auf einer oder beiden Seiten gerillt ist, ausgebildet ist.

3. Gestensteuerungsmodul gemäß Anspruch 1 oder 2, **dadurch gekennzeichnet, dass** das Gestensteuerungsmodul eine Frontabdeckung (6) umfasst und die Lichtbegrenzungsstruktur (4, 5) auf der Frontabdeckung (6) integral ausgebildet ist.

4. Gestensteuerungsmodul gemäß einem der Ansprüche 1 bis 3, **dadurch gekennzeichnet, dass** die mindestens zwei Infrarot-Leuchtdioden (1) mindestens zwei Sätze von parallelen Treiberkreisen (1-1, 1-2; 2-1, 2-2) zum Betreiben der Infrarot-Leuchtdioden mit verschiedenen Strömen zu verschiedenen Zeiten aufweisen.

5. Gestensteuerungsmodul gemäß einem der Ansprüche 1 bis 4, **dadurch gekennzeichnet, dass** das Gestensteuerungsmodul eine sichtbares Licht emittierende Vorrichtung (9, 10) umfasst, die für mindestens eines von dem Anzeigen einer Position, eines Betriebs des Gestensteuerungsmoduls und dem Bereitstellen einer Rückkopplung für die erkannte Geste verwendet wird.

6. Gestensteuerungsmodul nach Anspruch 5, **dadurch gekennzeichnet, dass** die sichtbares Licht emittierende Vorrichtung (9, 10) eine Leuchtdiode (9) mit sichtbarem Licht umfasst, die innerhalb der Lichtbegrenzungsstruktur (4) angeordnet ist.

7. Gestensteuerungsmodul gemäß einem der Ansprüche 1 bis 6, **dadurch gekennzeichnet, dass** das Gestensteuerungsmodul in der Lage ist, mindestens eine der folgenden Gesten oder eine Kombination von diesen zu erkennen:
- Schweben (Hover);
- Welle;
- einfacher Schlag;
- doppelter Schlag,
- Anheben.

8. Gestensteuerungsmodul gemäß einem der Ansprüche 1 bis 7, **dadurch gekennzeichnet, dass** das Gestensteuerungsmodul eine Oberflächenschicht (13) umfasst, die mit einer für Infrarot durchlässigen Tinte (131) und/oder einer sichtbares Licht streuenden Tinte (132) versehen ist.

9. Haushaltsgerät, umfassend das Gestensteuerungsmodul gemäß einem der Ansprüche 1 bis 8.

10. Haushaltsgerät gemäß Anspruch 9, **dadurch gekennzeichnet, dass** mindestens eine der folgenden Funktionen des Haushaltsgeräts gemäß einer Geste gesteuert wird, die von dem Gestensteuerungsmodul erkannt wird:
- Einschalten/Ausschalten
- Einschalten/Ausschalten eines Lichts;
- Öffnen/Schließen einer Tür;
- Einschalten/Ausschalten eines Ventils;
- Erhöhen/Absenken;
- spezielle Funktion.

11. Haushaltsgerät gemäß Anspruch 9 oder 10, **dadurch gekennzeichnet, dass** das Haushaltsgerät eine Dunstabzugshaube, ein Kühlschrank, ein Ofen, ein Küchenmixer, eine Waschmaschine, ein intelligenter Wasserhahn oder eine intelligente Toilette ist.

## Claims

1. Gesture control module based on the infrared reflection principle, comprising:
- at least two infrared light-emitting diodes (1);
- an infrared receiver tube (2); and
- a signal processor (3) for recognizing a gesture on the basis of a signal from the infrared receiver tube (2),
the infrared receiver tube (2) being arranged between the respective infrared light-emitting diodes (1) and a centre-to-centre distance (D1, D2) between the infrared light-emitting diodes (1) and the infrared receiver tube (2) ranging between 5 mm and 50 mm,
**characterized in that**
the infrared light-emitting diodes (1) and/or the infrared receiver tube (2) are surrounded by a light delimitation structure (4, 5), the light delimitation structure (4, 5) being flush with or higher than an upper end of the infrared light-emitting diodes (1) and/or infrared receiver tube (2); and
the gesture control module is integrated with a touch function which comprises at least one additional infrared light-emitting diode to be touched (7), which has a light emission intensity that is lower than the light-emission intensity of the at least two infrared light-emitting diodes (1), the centre-to-centre distance between the additional infrared light-emitting diode to be touched (7) and the infrared receiver tube (2) is within 20 mm and the at least two infrared light-emitting diodes for gesture control (1) and the at least one additional infrared light-emitting diode to be touched (7) jointly use the one infrared receiver tube (2).

2. Gesture control module according to Claim 1, **characterized in that** the light delimitation structure (4, 5) is in the form of a hollow cylinder, a hollow prism, a hollow conical frustum or hollow pyramidal frustum; and/or the light delimitation structure (4, 5) is in the form of a hollow cylinder, a hollow prism, a hollow conical frustum or hollow pyramidal frustum that is fluted on one or both sides.

3. Gesture control module according to Claim 1 or 2, **characterized in that** the gesture control module comprises a front cover (6) and the light delimitation structure (4, 5) is integrally formed on the front cover (6) .

4. Gesture control module according to any one of Claims 1 to 3, **characterized in that** the at least two infrared light-emitting diodes (1) have at least two sets of parallel driver circuits (1-1, 1-2; 2-1, 2-2) for operating the infrared light-emitting diodes with different currents at different times.

5. Gesture control module according to any one of Claims 1 to 4, **characterized in that** the gesture control module comprises a visible light-emitting apparatus (9, 10), which is used for at least one of indicating a position, operating the gesture control module and providing feedback for the recognized gesture.

6. Gesture control module according to Claim 5, **characterized in that** the visible light-emitting apparatus (9, 10) comprises a light-emitting diode (9) with visible light which is arranged within the light delimitation structure (4).

7. Gesture control module according to any one of Claims 1 to 6, **characterized in that** the gesture control module is capable of recognizing at least one of the following gestures or a combination thereof:
- hovering;
- wave;
- single tap;
- double tap;
- lifting.

8. Gesture control module according to any one of Claims 1 to 7, **characterized in that** the gesture control module comprises a surface layer (13) provided with infrared-transmissive ink (131) and/or visible light-scattering ink (132).

9. Household appliance comprising the gesture control module according to any one of Claims 1 to 8.

10. Household appliance according to Claim 9, **characterized in that** at least one of the following functions of the household appliance is controlled in accordance with a gesture that is recognized by the gesture control module:
- activation/deactivation;
- activation/deactivation of a light;
- opening/closing of a door;
- activating/deactivating of a valve;
- raising/lowering;
- specific function.

11. Household appliance according to Claim 9 or 10, **characterized in that** the household appliance is an extractor hood, a refrigerator, an oven, a kitchen mixer, a washing machine, an intelligent tap or an intelligent toilet.

## Revendications

1. Module de commande gestuelle, basé sur le principe de la réflexion infrarouge, comprenant :
- au moins deux diodes électroluminescentes à infrarouge (1) ;
- un tube récepteur d'infrarouge (2) ; et
- un processeur de signal (3) destiné à reconnaître un geste en se basant sur un signal du tube récepteur d'infrarouge (2),
le tube récepteur d'infrarouge (2) étant disposé entre les diodes électroluminescentes à infrarouge (1) respectives et un entraxe (D1, D2) entre les diodes électroluminescentes à infrarouge (1) et le tube récepteur d'infrarouge (2) étant compris entre 5 mm et 50 mm,
**caractérisé en ce que**
les diodes électroluminescentes à infrarouge (1) et/ou le tube récepteur d'infrarouge (2) sont entourés par une structure de limitation de la lumière (4, 5), la structure de limitation de la lumière (4, 5) étant affleurante d'une extrémité supérieure des diodes électroluminescentes à infrarouge (1) et/ou du tube récepteur d'infrarouge (2) ou plus haute que celle-ci ; et
le module de commande gestuelle est intégré avec une fonction tactile qui comprend au moins une diode électroluminescente à infrarouge supplémentaire servant au toucher (7) avec une intensité d'émission lumineuse qui est inférieure à l'intensité d'émission lumineuse des au moins deux diodes électroluminescentes à infrarouge (1), l'entraxe entre la diode électroluminescente à infrarouge supplémentaire servant au toucher (7) et le tube récepteur d'infrarouge (2) étant de l'ordre de 20 mm et les au moins deux diodes électroluminescentes à infrarouge (1) servant à la commande gestuelle et l'au moins une diode électroluminescente à infrarouge supplémentaire servant au toucher (7) utilisant ledit tube récepteur d'infrarouge (2) en commun.

2. Module de commande gestuelle selon la revendication 1, **caractérisé en ce que** la structure de limitation de la lumière (4, 5) est réalisée sous la forme d'un cylindre creux, d'un prisme creux, d'un cône tronqué creux ou d'une pyramide tronquée creuse ; et/ou la structure de limitation de la lumière (4, 5) est réalisée sous la forme d'un cylindre creux, d'un prisme creux, d'un cône tronqué creux ou d'une pyramide tronquée creuse qui est rainuré sur un ou les deux côtés.

3. Module de commande gestuelle selon la revendication 1 ou 2, **caractérisé en ce que** le module de commande gestuelle comporte un couvercle avant (6) et la structure de limitation de la lumière (4, 5) est formée d'un seul tenant sur le couvercle avant (6).

4. Module de commande gestuelle selon l'une des revendications 1 à 3, **caractérisé en ce que** les au moins deux diodes électroluminescentes à infrarouge (1) possèdent au moins deux jeux de circuits de pilotage (1-1, 1-2 ; 2-1, 2-2) parallèles destinés à faire fonctionner les diodes électroluminescentes à infrarouge avec des courants différents à des moments différents.

5. Module de commande gestuelle selon l'une des revendications 1 à 4, **caractérisé en ce que** le module de commande gestuelle comporte un dispositif (9, 10) émetteur de lumière visible qui est utilisé au moins pour l'affichage d'une position, un fonctionnement du module de commande gestuelle et/ou la fourniture d'une rétroaction pour le geste reconnu.

6. Module de commande gestuelle selon la revendication 5, **caractérisé en ce que** le dispositif (9, 10) émetteur de lumière visible comprend une diode électroluminescente (9) à lumière visible qui est disposée à l'intérieur de la structure de limitation de la lumière (4).

7. Module de commande gestuelle selon l'une des revendications 1 à 6, **caractérisé en ce que** le module de commande gestuelle est en mesure de reconnaître au moins l'un des gestes suivants ou une combinaison de ceux-ci :
- plané (survol) ;
- ondulation ;
- coup simple ;
- coup double ;
- levage.

8. Module de commande gestuelle selon l'une des revendications 1 à 7, **caractérisé en ce que** le module de commande gestuelle comporte une couche de surface (13) qui est pourvue d'une encre transparente aux infrarouges (131) et/ou d'une encre diffusant la lumière visible (132) .

9. Appareil ménager, comprenant le module de commande gestuelle selon l'une des revendications 1 à 8.

10. Appareil ménager selon la revendication 9, **caractérisé en ce qu'**au moins l'une des fonctions suivantes de l'appareil ménager est commandé selon un geste qui est reconnu par le module de commande gestuelle :
- Mise en marche/arrêt
- Allumage/extinction d'une lampe ;
- Ouverture/fermeture d'une porte ;
- Activation/désactivation d'une vanne ;
- Élévation/abaissement ;
- Fonction spéciale.

11. Appareil ménager selon la revendication 9 ou 10, **caractérisé en ce que** l'appareil ménager est une hotte aspirante, un réfrigérateur, un four, un robot de cuisine, un lave-linge, un robinet intelligent ou un W.C. intelligent.
